# EUROPÄISCHE PATENTANMELDUNG

(11) **EP 3 482 983 A1**
(43) Veröffentlichungstag der Anmeldung: **15.05.2019**
(21) Anmeldenummer: 18202256.6
(22) Anmeldetag: 24.10.2018
(51) Int. Cl.: B60J 10/18

(54) **DICHTUNGSPROFIL FÜR DIE ABDICHTUNG EINES FLÄCHENELEMENTES IN EINEM BAUKÖRPER, INSBESONDERE FÜR DIE ABDICHTUNG EINER SCHEIBE IN EINER KRAFTFAHRZEUGKAROSSERIE**

(30) Priorität: 14.11.2017 DE 102017126725
(71) Anmelder: Henniges Automotive GmbH & Co. KG, 31547 Rehburg Loccum (DE)
(72) Erfinder: Zak, Stanislav, 29431 Mladá Boleslav (CZ); Slavik, Daniel, 29421 Belá pod Bezdezem (CZ)
(74) Vertreter: Jabbusch, Matthias

(57) **Zusammenfassung**

Bei einem Dichtungsprofil für die Abdichtung eines Flächenelementes in einem Baukörper, insbesondere für die Abdichtung einer Scheibe in einer Kraftfahrzeugkarosserie, umfassend einen Ansetzbereich zum Ansetzen an den Baukörper, wobei der Ansetzbereich ein Armierungsprofil mit zumindest einem frei nach außen sichtbaren Zierbereich hat, und zumindest einen Dichtungsbereich, ist vorgesehen, dass das Armierungsprofil aus einem dünnen Metallmaterial und zumindest einem harten Kunststoffmaterial ausgebildet ist, wobei das Kunststoffmaterial an das Metallmaterial anextrudiert ist und wobei das Metallmaterial den Zierbereich aufweist.

## Beschreibung

Die Erfindung betrifft ein Dichtungsprofil für die Abdichtung eines Flächenelementes in einem Baukörper, insbesondere für die Abdichtung einer Scheibe in einer Kraftfahrzeugkarosserie, umfassend einen Ansetzbereich zum Ansetzen an den Baukörper, wobei der Ansetzbereich ein Armierungsprofil mit zumindest einem frei nach außen sichtbaren Zierbereich hat, und umfassend zumindest einen Dichtungsbereich.

Dichtungsprofile der eingangs genannten Gattung werden für das Einfassen von Kraftfahrzeugscheiben eingesetzt. Sie überbrücken den Abstand zwischen Glasscheibe und Kraftfahrzeugkarosserie, insbesondere zwischen Glasscheibe und einem Flansch der Karosserie. Der Ansetzbereich des Dichtungsprofils dient dem Ansetzen des Dichtungsprofils an die Kraftfahrzeugkarosserie, beispielsweise wird das Dichtungsprofil auf einen Karosserieflansch aufgesteckt. Ein Dichtungsbereich kann sich dann an eine fest oder beweglich eingebaute Glasscheibe dichtend anlegen.

Aus der EP 1 386 769 A2 ist ein derartiges Dichtungsprofil mit einem im Ansetzbereich angeordneten Armierungsprofil bekannt. Dieses Armierungsprofil stabilisiert das Dichtungsprofil, zugleich weist es mit einem frei nach außen sichtbaren Abschnitt einen Zierbereich auf.

In der EP 1 386 769 A2 ist der neben dem Armierungsprofil noch vorhandene Dichtungsbereich aus einem weichen Kunststoff gefertigt. Der Dichtungsbereich erstreckt sich bis zum Armierungsprofil, aufgrund der dichtenden Eigenschaften, ist er aus dem weichen Kunststoff ausgebildet. Das Armierungsprofil hat demgegenüber eine stärkere Ausbildung, da es die Haltekräfte für das Dichtungsprofil aufnimmt.

Der Erfindung liegt die Aufgabe zugrunde, ein Dichtungsprofil der eingangs genannten Gattung aufzuzeigen, das leichter und einfacher ausgebildet ist und bei guter Stabilität einen Zierbereich aufweist.

Diese Aufgabe ist erfindungsgemäß dadurch gelöst, dass das Armierungsprofil aus einem dünnen Metallmaterial und zumindest einem harten Kunststoffmaterial ausgebildet ist, wobei das Kunststoffmaterial an das Metallmaterial anextrudiert ist und wobei das Metallmaterial den Zierbereich aufweist.

Auch das erfindungsgemäße Dichtungsprofil hat ein Armierungsprofil. Dieses weist erfindungsgemäß jedoch ein dünnes Metallmaterial auf, woraus folgt, dass der Metalleinsatz reduziert ist. Damit können Kosten gespart werden. Mit dem dünnen Metallmaterial kann an einem frei nach außen sichtbaren Zierbereich gleichwohl der Effekt einer Zierleiste oder ähnlich ausgebildet werden.

Zur Herstellung der notwendigen Stabilität des Dichtungsprofils und der damit einhergehenden sicheren Befestigung des Dichtungsprofils an dem Flansch zum Beispiel einer Kraftfahrzeugkarosserie ist erfindungsgemäß ein anextrudiertes hartes Kunststoffmaterial vorgesehen. Dieses wird an das dünne Metallmaterial anextrudiert, so dass es eine feste Verbindung mit dem Metallmaterial eingeht und nach Aushärten zu einem harten Kunststoffmaterial dieses stabilisiert. Dünnes Metallmaterial und hartes Kunststoffmaterial bilden das Armierungsprofil gemeinsam aus.

Nach einer ersten Weiterbildung der Erfindung ist vorgesehen, dass das Metallmaterial ein Feinblech mit einer Stärke von ca. 0,2 bis 0,4 mm ist. Das Feinblech weist also eine dünne Stärke auf, die eine nahezu folienartige Ausbildung bewirkt.

Das Metallmaterial hat vorzugsweise eine U-Form, wobei eine Außenseite eines U-Schenkels als Zierbereich ausgebildet ist und an den Innenseiten von U-Basis und U-Schenkeln das anextrudierte harte Kunststoffmaterial angelegt ist. Die U-Form des Armierungsprofils ist bekannt. Ein derartiges U-Profil kann auf den Flansch z. B. einer Kraftfahrzeugkarosserie aufgesteckt werden. Nach dieser Weiterbildung wird das anextrudierte Kunststoffmaterial an den Innenseiten von U-Basis und U-Schenkeln angeordnet, so dass die Außenseite des Armierungsprofils als Zierbereich genutzt werden kann.

Das anextrudierte Kunststoffmaterial ist beispielsweise Polypropylen (PP) oder ein anderer harter Kunststoff, wie z. B. ABS.

Eine nächste Weiterbildung der Erfindung ist dadurch gekennzeichnet, dass an das Armierungsprofil und an das anextrudierte harte Kunststoffmaterial zusätzlich ein weiches Kunststoffmaterial zum Ausbilden des Dichtungsbereiches anextrudiert ist. Mit dem weichen Kunststoffmaterial wird der Dichtungsbereich ausgebildet, der an zugeordnete Bauteile anlegbare Abschnitte aufweist. Hartes Kunststoffmaterial und weiches Kunststoffmaterial können kurz nacheinander an das den Ausgangspunkt bildende dünne Metallmaterial anextrudiert werden. Die Fertigung des Dichtungsprofils ist dadurch automatisierbar und vereinfacht.

Mit dem weichen Kunststoffmaterial können entsprechende Dichtlippen und Dichtvorsprünge sowohl an der Außenseite des Armierungsprofils sowie an der Innenseite des Armierungsprofils angeordnet werden.

Mit dem anextrudierten weichen Kunststoffmaterial kann auch der frei nach außen sichtbare Zierbereich des Metallmaterials belegt sein. Diese Belegung dient einem Schutz des Zierbereiches während einer Herstellungsphase. Ist diese abgeschlossen, kann die Belegung des Zierbereichs aufgehoben werden.

Zur weiteren Ausbildung der Erfindung ist noch vorgesehen, dass auf Abschnitte des Metallmaterials und des harten Kunststoffmaterials vor dem Anextrudieren des weichen Kunststoffmaterials ein Primer aufgetragen ist. Dieser Primer verbessert die Verbindung zwischen Metallmaterial und hartem Kunststoffmaterial auf der einen Seite und dem weichen Kunststoffmaterial auf der anderen Seite. Daher wird auf die Bereiche des Metallmaterials, die später den nach außen sichtbaren Zierbereich ausbilden, der Primer nicht aufgetragen.

Das weiche Kunststoffmaterial ist vorzugsweise ein EPDM.

Ein Ausführungsbeispiel, aus dem sich weitere erfinderische Merkmale ergeben, sind in der Zeichnung dargestellt. Es zeigen:
- Figur 1:: ein erfindungsgemäßes Dichtungsprofil während seines Einbaus an den Flansch einer Kraftfahrzeugkarosserie und
- Figur 2:: das Dichtungsprofil gemäß Figur 1 während seiner Verwendung.

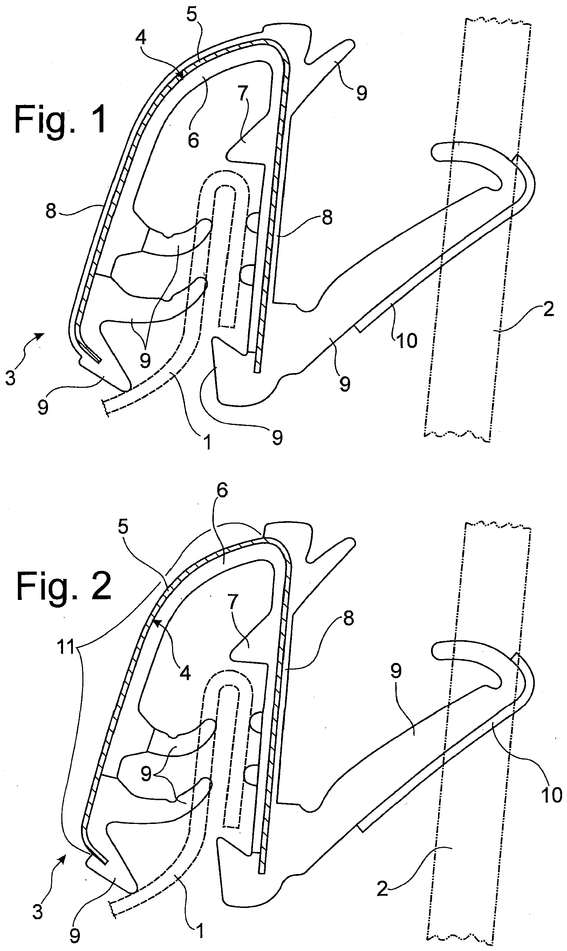

Figur 1 zeigt einen Flansch 1 einer Kraftfahrzeugkarosserie, dem eine Glasscheibe 2 anzunähern ist. Der Übergang zwischen Flansch 1 und Glasscheibe 2 wird durch das erfindungsgemäße Dichtungsprofil gewährleistet, dieses wird dazu an dem Flansch 1 befestigt.

Der Befestigung des Dichtungsprofils dient ein Ansetzbereich 3 mit dem das Dichtungsprofil auf dem Flansch 1 aufgesetzt wird. Der Ansetzbereich 3 umfasst ein U-förmig ausgebildetes Armierungsprofil 4. Das Armierungsprofil 4 ist erfindungsgemäß aus einem dünnen Metallmaterial 5 und einem an das Metallmaterial 5 anextrudierten harten Kunststoffmaterial 6 ausgebildet. Das harte Kunststoffmaterial 6 ist an die Innenseiten der U-Schenkel sowie der U-Basis des Armierungsprofils 4 angeordnet. Das harte Kunststoffmaterial 6 bildet dabei mit Hilfe eines Vorsprungs 7 einen Endanschlag für das Aufsetzen des Dichtungsprofils auf den Karosserieflansch 1 aus.

Auf der Außenseite des Armierungsprofils 4 ist ein weiches Kunststoffmaterial 8 angeordnet. Dieses ist an das Metallmaterial 5 und an das harte Kunststoffmaterial 6 anextrudiert, es deckt die Außenseite des Armierungsprofils 4 ab und bildet darüber hinaus Dichtlippen 9. Diese legen sich an verschiedene Abschnitte des Karosserieflansches 1 oder an die Glasscheibe 2 an. Die Dichtlippe 9 zum Anlegen an die Glasscheibe 2 ist noch mit einem Flockmaterial 10 belegt, das die Gleitfähigkeit der Scheibe 2 entlang des weichen Kunststoffmaterials 8 verbessert.

Figur 2 zeigt das Dichtungsprofil unter Ausbildung eines nach außen hin sichtbaren Zierbereiches 11. Dieser Zierbereich 11 ist durch Abschnitte an der Außenseite eines U-Schenkels des Armierungsprofils 4 durch das dünne Metallmaterial 5 ausgebildet. In diesem Bereich ist das weiche Kunststoffmaterial 8 entfernt worden. In anderen Bereichen haftet das weiche Kunststoffmaterial 8 an dem dünnen Metallmaterial 5 bzw. an dem harten Kunststoffmaterial 6 vorzugsweise unter Einsatz eines Primers zwischen diesen Materialien.

## Patentansprüche

1. Dichtungsprofil für die Abdichtung eines Flächenelementes in einem Baukörper, insbesondere für die Abdichtung einer Scheibe in einer Kraftfahrzeugkarosserie, umfassend einen Ansetzbereich zum Ansetzen an den Baukörper, wobei der Ansetzbereich ein Armierungsprofil mit zumindest einem frei nach außen sichtbaren Zierbereich hat, und zumindest einen Dichtungsbereich,
**dadurch gekennzeichnet,**
**dass** das Armierungsprofil aus einem dünnen Metallmaterial (5) und zumindest einem harten Kunststoffmaterial (6) ausgebildet ist, wobei das Kunststoffmaterial (6) an das Metallmaterial (5) anextrudiert ist und wobei das Metallmaterial (5) den Zierbereich (11) aufweist.

2. Dichtungsprofil nach Anspruch 1, **dadurch gekennzeichnet, dass** das Metallmaterial (5) ein Feinblech mit einer Stärke von ca. 0,2 bis 0,4 mm ist.

3. Dichtungsprofil nach Anspruch 1 oder 2, **dadurch gekennzeichnet, dass** das Metallmaterial (5) eine U-Form hat, wobei eine Außenseite eines U-Schenkels als Zierbereich (11) ausgebildet ist und an den Innenseiten von U-Basis und U-Schenkeln das anextrudierte harte Kunststoffmaterial (6) angelegt ist.

4. Dichtungsprofil nach einem der vorhergehenden Ansprüche, **dadurch gekennzeichnet, dass** das anextrudierte harte Kunststoffmaterial (6) PP ist.

5. Dichtungsprofil nach einem der vorhergehenden Ansprüche, **dadurch gekennzeichnet, dass** an das dünne Metallmaterial (5) und an das anextrudierte harte Kunststoffmaterial (6) zusätzlich ein weiches Kunststoffmaterial (8) zum Ausbilden des Dichtungsbereichs anextrudiert ist.

6. Dichtungsprofil nach Anspruch 5, **dadurch gekennzeichnet, dass** mit dem weichen Kunststoffmaterial (8) Dichtlippen (9) ausgebildet sind.

7. Dichtungsprofil nach Anspruch 5 oder 6, **dadurch gekennzeichnet, dass** der frei nach außen sichtbare Zierbereich (11) des Metallmaterials (5) mit dem anextrudierten weichen Kunststoffmaterial (8) belegt ist.

8. Dichtungsprofil nach einem der Ansprüche 5 bis 7, **dadurch gekennzeichnet, dass** auf Abschnitte des dünnen Metallmaterials (5) und des harten Kunststoffmaterials (6) vor dem Anextrudieren des weichen Kunststoffmaterials (8) ein Primer aufgetragen ist.

9. Dichtungsprofil nach einem der Ansprüche 5 bis 8, **dadurch gekennzeichnet, dass** das weiche Kunststoffmaterial (8) ein EPDM ist.
